# EUROPEAN PATENT SPECIFICATION

(11) **EP 1 944 846 B1**
(45) Date of publication and mention of the grant of the patent: **24.02.2010**
(21) Application number: 07076091.3
(22) Date of filing: 14.12.2007
(51) Int. Cl.: H02G 3/12

(54) **Installation box with anchoring means**
Installationsdose mit Verankerungsmitteln
Boîtier d'installation avec supports d'ancrage

(30) Priority: 22.12.2006 NL 1033126
(43) Date of publication of application: 16.07.2008
(73) Proprietor: ABB B.V., 6716 AA Ede (NL)
(72) Inventor: Witte, Adriaan Marinus, 6716 AA EDE (NL)
(74) Representative: De Hoop, Eric

(56) References cited:
- WO-A-01/31759
- DE-A1- 2 213 277
- DE-A1- 3 041 919
- NL-C- 1 020 862

## Description

### BACKGROUND OF THE INVENTION

The invention relates to an installation box to be placed in a hole in a wall of a building. Such installation boxes are used for installing electrical installations in the building, wherein the installation box is incorporated in a hole in the wall of te building. The installation box may for instance be secured by applying a layer of plaster onto the wall.

If no layer of plaster is applied, for instance in case of a wooden wall or a composite wall, then the installation box can be secured for instance by screws which are put in through the bottom. The correct length of the screws should always be taken into consideration here to prevent the screws from protruding at the opposite side of the wall. Moreover screwing-in is a laborious process.

DE-A-30 41 919 discloses an installation box in accordance with the preamble of claim 1. NL-C-1020862 discloses an installation box in accordance with the preamble of claim 19.

It is an object of the invention to provide an installation box that can easily be secured in a hole.

It is an object of the invention to provide an installation box that can be secured in a blind hole in a wall.

### SUMMARY OF THE INVENTION

According to one aspect, the invention provides an installation boxaccording to claim 1.

The anchoring member can anchor the installation box in the hole in the wall by pulling the pull operation member away from the bottom after placing the installation box. As a result it may be unnecessary to place for instance screws through the wall of the bottom of the box. The pull operation member can be engaged while the installation box has already been placed in the hole. The anchoring member can transversely engage the bounding wall.

The outward direction of the anchoring member is being defined here as a motion according to a motion path that is at an angle of less than 10 degrees, preferably less than 5 degrees with respect to the normal of the circumferential wall and/or the plane of the bottom wall.

With one hand the electrician can keep the installation box positioned within the hole and with the other hand he can pull the pull operation member in opposite direction if the pull operation member is movable substantially transverse to the bottom wall and/or parallel to the circumferential wall.

In one embodiment the anchoring member can be moved in outward direction with respect to the circumferential wall for substantially radial engagement onto the circumferential bounding wall of the hole. In the two afore-mentioned embodiments the anchoring member can engage onto the bounding wall after a relatively short motion range.

The bottom wall can define the deepest section and hence the installation depth of the installation box if the anchoring member is movable in outward direction with respect to the circumferential wall within a radial external circumferential area of the circumferential wall. The radial outer circumferential area is hereby defined as the area that is bounded by a plane extending through the upper edge and a plane extending through the bottom wall.

In one embodiment the anchoring member and the pull operation member are substantially transversely movable with respect to each other.

In a first development the anchoring member and the pull operation member are provided with conversion means for converting a translation of the operation member in the pulling direction into a translation of the anchoring member in the outward direction.

The anchoring member and/or the pull operation member may preferably comprise a run-off surface oriented inclined to the pulling direction for conversion of the pulling motion of the operation member into the outward motion of the anchoring member. By applying an inclined run-off surface in addition to a translating motion a rotary motion or outwardly rotating motion of the anchoring member may be realised as well.

In a simple embodiment the anchoring member comprises a first wedge member, and the pull operation member a second wedge member that cooperates with the first wedge member.

The anchoring member and the pull connection member may form an insertable unit that can be inserted only if necessary if in pulling direction the anchoring member and the pull operation member are connected to each other in a mutually movable manner.

Preferably in a starting position the first and second wedge member are positioned straight opposite each other, so that the run-off range of the wedge members can be optimally utilized.

In an embodiment that is obtained by injection moulding the installation box comprises a living hinge between the anchoring member and the pull operation member.

The first and second wedge member for instance can be prevented from losing their cooperative relation if the anchoring member and the pull operation member comprise cooperating stops for limiting the translation of the pull operation member in an ultimate outward position of the pull operation member.

The anchoring member can move at the same height with respect to the installation opening, for instance in order to keep the first and second wedge member superposed during securing if the installation box comprises first guiding means for guiding the anchoring member in its outward direction and counteracting a movement of the anchoring member in the pulling direction.

In one embodiment thereof the first guiding means comprise first teeth at opposite sides of a channel that is formed in the circumferential wall, and second teeth at the anchoring member which second teeth cooperate with the first teeth, wherein the first teeth mesh with the second teeth and extend transverse to the circumferential wall. The first teeth may for instance be formed with a rack at the inside of the channel.

The motion of the pull operation member can be restricted to a motion in the pulling direction if the installation box comprises second guiding means for guiding the pull operation member with respect to the circumferential wall.

The pull operation member can be connected easily to the circumferential wall, for instance by insertion, if the second guiding means comprise a channel that is formed in the circumferential wall for accommodation of at least a portion of the pull operation member.

The pull operation member can be retained securely within the channel if the second guiding means comprise a longitudinal guide or rail extending along the channel, and an engagement part connected to the pull operation member which engagement part engages onto the longitudinal guide.

A reverse motion of the anchoring member can be prevented if the installation box comprises blocking means for counteracting a reverse movement of the pull operation member.

In one embodiment thereof the blocking means comprise third teeth at opposite sides of a channel that is formed in the circumferential wall, and fourth teeth at opposite sides of the pull operation member, which fourth teeth cooperate with the third teeth. The third teeth may for instance be formed with a rack at the inside of the channel.

The number of locking positions of the pull operation member with respect to the channel can be doubled if in pulling direction the third and/or fourth teeth at opposite sides of the pull operation member are staggered half a tooth with respect to each other. Hence a tooth may at any time be engaged onto either the one side or half a pitch furtheron onto the other side.

The pull operation member can be engaged by one finger or for instance between two fingers if the pull operation member comprises a finger engagement part for manually pulling the pull operation member away from the bottom.

After the box has been secured the finger engagement member may be removed from the upper side by firmly pulling or turning if the finger engagement part by means of a predetermined break connection, preferably a predetermined torsion break connection, forms a unity with the pull operation member.

The anchoring member can fasten itself firmly in the circumferential wall of a hole in a wall of compressible material such as chipboard or plaster if the anchoring member comprises an engagement surface having a fifth tooth or teeth for engagement onto the bounding wall of the hole.

According to a further aspect, the invention furthermore provides an installation box according to claim 19.

The aspects and measures described in this description and claims and/or shown in the drawings of this application may where possible also be used individually. Said individual aspects, and other aspects, may be the subject of divisional patent applications relating thereto. This applies in particular to the measures and aspects that have been described per se in the sub-claims.

### SHORT DESCRIPTION OF THE DRAWINGS

The invention will by way of example be elucidated on the basis of a number of exemplary embodiments shown in the attached drawings, in which:
Figure 1 is a view in perspective of an installation box according to the invention;
Figure 2 is a side view of the installation box according to figure 1;
Figure 3 is a view in perspective of the installation box according to figures 1 and 2, provied with two anchoring elements according to the invention;
Figures 4 and 5 are a view in perspective, a side view respectively, of one of the anchoring elements according to figure 3, in an initial position;
Figure 6 is a side view of the anchoring elements according to figures 4 and 5, in an anchoring position; and
Figure 7 is a view in perspective of the installation box with the anchoring elements according to figure 3, with the anchoring elements in the anchoring position.

### DETAILED DESCRIPTION OF THE DRAWINGS

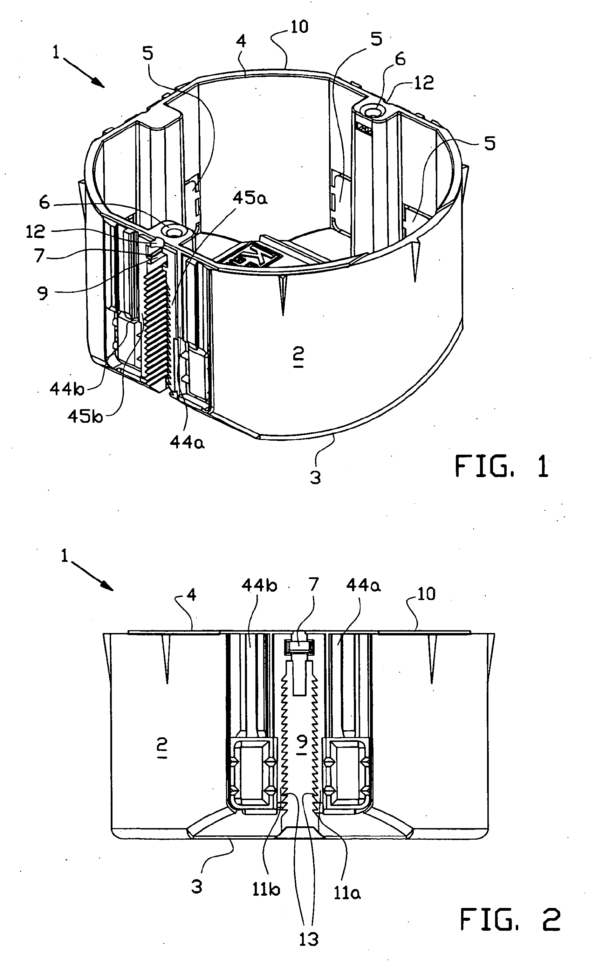

The synthetic installation box 1 as depicted in figures 1 and 2 comprises a circumferential wall and an integrally formed bottom wall 3. At the side facing away from the bottom wall 3 the circumferential wall 2 changes into an upper edge 4, that defines an access opening to the interior of the installation box 1. The upper edge 4 is provided with a placement flange 10. In the circumferential wall 2 a number of break-through gates 5 have been provided. For fastening switch material the installation box 1 comprises two assembly holes 6 and insert slots 7, formed therebeneath, for otherwise not depicted nut plates into which locking bolts to be inserted through the assembly holes can be fixed.

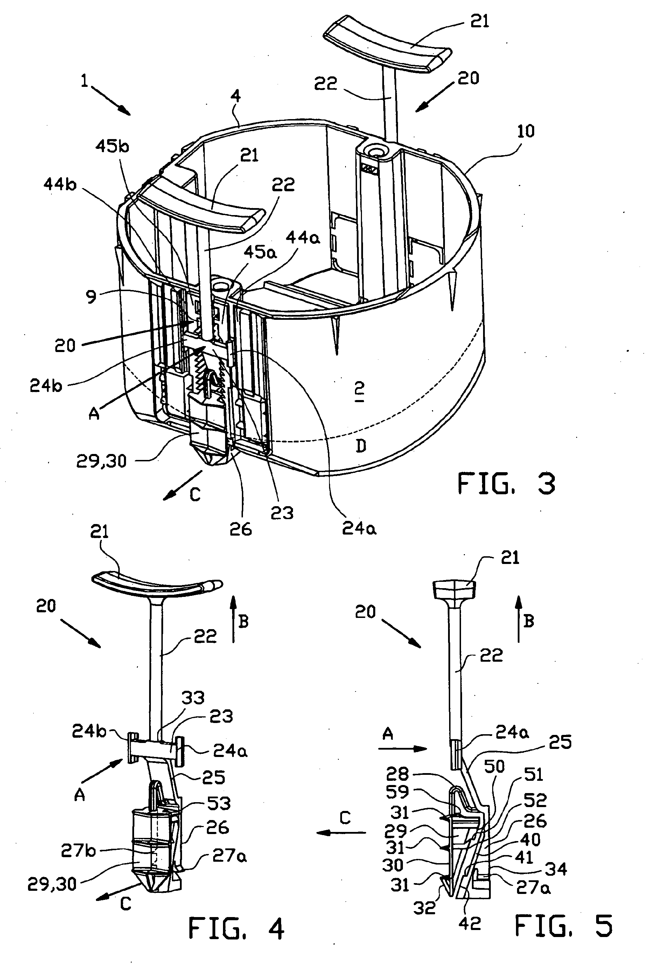

At two opposite sides of the circumferential wall 2 channels 9 have been formed integrally, which extend perpendicular to the bottom wall 3. In two opposite channel planes these channels 3 have been provided with gear racks 11a, 11b. As can be seen in figure 2 the teeth of the gear racks 11a, 11b have been provided with detaining planes 13 which extend parallel to the bottom wall 3 and face away from it. The channels 9 are open at their bottom end. At the opposite upper side a semicircular recess 12 has been formed in the placement flange 4. Along the channels 9 two longitudinal guides 45a, 45b have been formed which at the outer sides along an acute angle rim change into two longitudinal grooves 44a, 44b. In figure 3 two synthetic anchoring elements 20 have been placed in the channel 29, one of which has been depicted in figures 4-6.

The shown anchoring element 20 comprises a curved finger engagement 21, an elongated stem 22 that connects the finger engagement 21 via a break connection 33 with a guide 23, an intermediate portion 25 inclined to the stem 22, a first wedge member 26 that is rigidly connected with the intermediate portion 25, and the rear side 34 of which extends parallel to the stem 22, and a second wedge member 29 that is connected to the intermediate portion 25 by means of a bending strip 28.

At the ends the guide 23 comprises two hook portions 24a, 24b that can partially snap behind the longitudinal guides 45a, 45b via the longitudinal grooves 44a, 44b. At the end opposite the handle 21 the first wedge member 26 comprises a right blocking tooth 27a and a left blocking tooth 27b which are resiliently connected to the first wedge member 26. In the longitudinal or pull direction B the left tooth 27a and the right tooth 27b are staggered half a gear rack pitch with respect to each other.

The first wedge member 26 comprises a first wedge plane 40, inclined to the rear side 34, facing the second wedge member 29, that at the lower end of the first wedge member 26 via a first abutment 41 that is directed transverse to the first wedge plane 40, changes into a second wedge plane 42. The second wedge member 29 comprises a third wedge plane 50 facing the first wedge member 26, that via a second abutment 51 changes into a fourth wedge plane 52. In the unstretched condition of the bending strip 28 as shown in figures 4 and 5 the first and third wedge plane 40, 50, and the second and fourth wedge plane 42, 52 are parallel to each other at a short distance from each other, wherein the distance between the first and second abutment 41, 52 is a multiple of the distance between said wedge planes.

At the side facing away from the first wedge member 26 the second wedge member 29 comprises an anchoring plane 30 with a series of anchoring teeth 31 directed transverse thereto and projecting from the anchoring plane 30. An inclined run-off edge 32 extends between the lower anchoring position 31 and the anchoring plane 30. In this example the anchoring positions 31 extend along the width of the anchoring plane. Alternatively the anchoring positions can be divided in this orientation, wherein the teeth members are staggered with respect to each other in the longitudinal direction of the second wedge member 29. The anchoring positions 31 or the anchoring placement members may, alternatively, also be inclined to the anchoring plane 30, for instance with the free ends facing towards or away from each other, either in pairs or not.

The second wedge member 29 comprises at the upper side at either side two transverse guides 53 which extend parallel to each other and transverse to the longitudinal direction, which as to shape and position are adapted to the teeth of the gear racks 11a, 11b so as to mesh therewith.

The installation box 1 is particularly suited to be placed in a hole in a wall that has been constructed with plasterboards, wood, chipboard or combinations thereof. For that purpose in such a wall, otherwise not depicted, a blind hole is drilled with a diameter that is approximately equal to, or some millimeters larger than the diameter of the described circle D of the circumferential wall 2 of the installation box 1.

When applying the anchoring elements 20 for securing the installation box 1 in the hole in the wall in each channel 9 an anchoring element 20, with the bending strip 28 in the unstretched condition, is placed partially in the channels 9 in direction A, wherein the guide 23 snaps behind the longitudinal guides 44a, 44b, the blocking teeth 27a, 27b at the first wedge member 26 engage the teeth of the gear racks 11a, 11b, the transverse guides 53 engage the higher positioned teeth of the gear racks 11a, 11b, the intermediate section 25 is incorporated between the teeth of the gear racks 11a, b, in a fitting manner and the stem 22 is partially incorporated in the recess 12. In this initial position the anchoring elements 20 are positioned in the longitudinal direction of the channel 9 such that each first and second wedge member 26, 29 at the lower end extends above the plane of the bottom wall 3. The ends of the anchoring positions 30 are then still positioned within a described circle D of the installation wall 2.

After placing the installation box 1 in the hole in the wall the placement flange 10 abuts against the wall. After that each anchoring element 20 is engaged between two fingers behind the finger engagements 21. Subsequently by pulling in the direction B the finger engagement 21 is moved away from the installation box 1, as a result of which the first wedge plane 26 moves upward in direction B with respect to the second wedge member 29 that is kept at a fixed height with respect to the bottom wall 3 by the transverse guides 53.

The first and third wedge plane 40, 50 on the one hand, and the second and fourth wedge plane 42, 52 on the other hand become superposed by the mutual movement, after which during pulling out further in direction B the second wedge member 29 is partially moved out of the channel 9 by the cooperation of the wedge planes in direction C transverse to the wall 2. The second wedge member 29 moves in direction C within the radial circumferential area of the installation box 1, that is bounded by a plane that extends through the upper edge 4 and a plane that extends through the bottom wall 3. Here the anchoring positions 31 and subsequently the anchoring plane 30 arrive beyond the described circle D of the installation box 1 so as to fasten themselves against and partially in the circumferential wall of the hole. Direction C is directed parallel, in this example exactly parallel to the normal of the circumferential wall 3 and/or the plane of the bottom wall 3. When expressed in degrees direction C is at an angle of less than 10 degrees, preferably less than 5 degrees with respect to the normal of the circumferential wall 3 and/or the plane of the bottom wall 3.

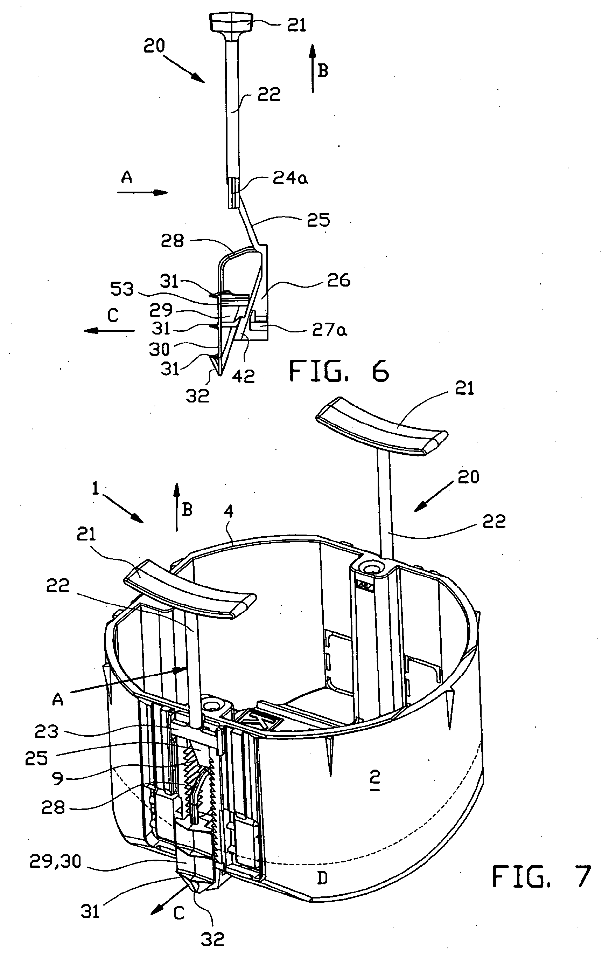

The pulling motion in direction B continues until the first abutment 41 and second abutment 52 become positioned against each other (as has been depicted in figure 6 also independently from the installation box 1) as a result of which the movement of the first wedge member 26 in direction B is blocked by the second wedge member 29. By pulling further in direction B or by rotating the finger engagement 21 around the centre line of the stem 22 the break connection 33 breaks, as a result of which the upper side of the installation box 1 is exposed for applying switch material. Because of the operation of the blocking teeth 27a, 27b it is not possible to move the second wedge member 26 opposite to the direction B. Between the finger engagement 21 and the stem an eyelet may be provided for insertion of a screw driver with which the finger engagement 21 can be turned, or the finger engagement 21 can be pulled.

The above description is included to illustrate the operation of possible embodiments of the invention and not to limit the scope of the invention. Starting from the above explanation many variations that fall within the spirit and scope of the present invention will be evident to an expert.

## Claims

1. Installation box (1) to be placed in a hole in a wall of a building, comprising a bottom wall (3), a circumferential wall of which an upper edge (4) bounds an installation opening, and anchoring means (20) for anchoring the installation box in the hole in the wall, wherein the anchoring means (20) comprise an anchoring member (29, 30) that is movable in an outward direction (C) with respect to the circumferential wall (2) substantially transverse to the circumferential wall and/or parallel to the bottom wall (3) for engagement onto a circumferential bounding wall of the hole, **characterized in that** the anchoring means (20) comprise a pull operation member (21, 22) that is movable with respect to the circumferential wall (2) in a pulling direction (B) away from the bottom wall (3) for in cooperation with the anchoring member (29, 30) moving the anchoring member (29,30) outward, which pull operation member (21, 22) during the outward movement of the anchoring member at least partially projects above the upper edge (4) of the installation box (1).

2. Installation box (1) according to claim 1, wherein the pull operation member (21, 22) is movable substantially transverse to the bottom wall (3) and/or parallel to the circumferential wall (2).

3. Installation box (1) according to any one of the preceding claims, wherein the anchoring member (29, 30) can be moved in outward direction (C) with respect to the circumferential wall (2) within a radial external circumferential area of the circumferential wall (2).

4. Installation box (1) according to any one of the preceding claims, wherein the anchoring member (29, 30) is movable in outward direction (C) with respect to the circumferential wall (2) for substantially radial engagement onto the circumferential bounding wall of the hole.

5. Installation box (1) according to any one of the preceding claims, wherein the anchoring member (29, 30) and the pull operation member (21,22) are substantially transversely movable with respect to each other.

6. Installation box (1) according to any one of the preceding claims, wherein the anchoring member (29, 30) and the pull operation member (21, 22) are provided with conversion means (26, 29) for converting a translation of the operation member (21, 22) in the pulling direction (B) into a translation of the anchoring member (29, 30) in the outward direction (C).

7. Installation box (1) according to any one of the preceding claims, wherein the anchoring member (29, 30) and/or the pull operation member (21, 22) comprise a run-on surface (52, 40) oriented inclined to the pulling direction (B) for conversion of the pulling motion of the operation member (21, 22) into the outward motion of the anchoring member (29, 30).

8. Installation box (1) according claim 6 or 7, wherein the anchoring member (29, 30) comprises a first wedge member (29), and the pull operation member (21, 22) a second wedge member (26) that cooperates with the first wedge member (29).

9. Installation box according to claim 8, wherein in a starting position the first and second wedge member (29, 26) are positioned straight opposite each other.

10. Installation box (1) according to any one of the preceding claims, wherein in pulling direction (B) the anchoring member (29, 30) and the pull operation member (21, 22) are connected to each other in a mutually movable manner.

11. Installation box (1) according to claim 9 or 10 comprising a living hinge (28) between the anchoring member (29, 30) and the pull operation member (21, 22).

12. Installation box (1) according to any one of the claims 6-11, wherein the anchoring member (29,30) and the pull operation member (21, 22) comprise cooperating stops (51, 41) for limiting the translation of the pull operation member (21, 22) in an ultimate extended position of the pull operation member (21, 22).

13. Installation box (1) according to any one of the preceding claims, comprising first guiding means (11a, b, 53) for guiding the anchoring member (29, 30) in its outward direction (C) and counteracting a movement of the anchoring member (29, 30) in the pulling direction (B), wherein the first guiding means (11 a, b, 53) preferably comprise first teeth (11a, b) at opposite sides of a channel (9) that is formed in the circumferential wall (2), and second teeth (53) at the anchoring member (29, 30) which second teeth (53) cooperate with the first teeth (11a, b), wherein the first teeth (11a, b) mesh with the second teeth (53) and extend transverse to the circumferential wall (2).

14. Installation box (1) according to any one of the preceding claims, comprising second guiding means (44 a, b, 24a, b) for guiding the pull operation member (21, 22) with respect to the circumferential wall (2), wherein the second guiding means (44 a, b ,24 a, b) preferably comprises a channel (9) that is formed in the circumferential wall (2) for accommodation of at least a portion of the pull operation member (21, 22), wherein the second guiding means (44 a, b, 24 a, b) preferably comprise a longitudinal guide or rail (44 a,b) extending along the channel (9) and an engagement part (24 a, b connected to the pull operation member (21, 22) which engagement part (24 a, b) engages onto the longitudinal guide (44 a, b).

15. Installation box (1) according to any one of the preceding claims, comprising blocking means (11 a, b, 27 a, b) for counteracting a reverse movement of the pull operation member (21, 22), wherein the blocking means (11 a, b, 27 a, b) preferably comprise third teeth (11 a, b) at opposite sides of a channel (9) that is formed in the circumferential wall (2), and fourth teeth (27 a, b) at opposite sides of the pull operation member (21, 22), which fourth teeth (27 a, b) cooperate with the third teeth (11 a, b), wherein in pulling direction (B) the third and/or fourth teeth (11 a, b 27 a, b) at opposite sides of the pull operation member (21, 22) preferably are staggered half a tooth with respect to each other.

16. Installation box (1) according to any one of the claims 13-15 wherein the channel (9) is oriented transverse to the bottom wall (3) of the installation box (1).

17. Installation box (1) according to any one of the preceding claims, wherein the pull operation member (21, 22) comprises a finger engagement part (21) for manually pulling the pull operation member (21, 22) away from the bottom wall (3), wherein the finger engagement part (21) preferably by means of a predetermined break connection (33), preferably a predetermined torsion break connection, forms a unity with the pull operation member (21, 22).

18. Installation box (1) according to any one of the preceding claims, wherein the anchoring member (29, 30) comprises an engagement surface (30) having a fifth tooth or teeth (31) for engagement onto the bounding wall of the hole.

19. Installation box (1) to be placed in a hole in a wall of a building, comprising a bottom wall (3), a circumferential wall (2) bounding an installation opening, and anchoring means (20) for anchoring the installation box (1) in the hole in the wall, wherein the anchoring means (20) comprise an anchoring member (29, 30) for engagement onto the wall, a pull operation member (21, 22) which is movable in a pulling direction (B) away from the bottom wall (3) through a channel (9) that is formed in the circumferential wall (2), and blocking means (11 a, b, 27 a, b) for counteracting a reverse movement of the pull operation member (21, 22), wherein the blocking means (11 a, b, 27 a, b) comprise third teeth (11 a, b) at opposite sides of the channel (9), and fourth teeth (27 a, b) at opposite sides of the pull operation member (21, 22) which third teeth (11 a, b) cooperate with the fourth teeth, **characterized in that** in the pulling direction (B) the third and/or fourth teeth (11 a, b, 27 a, b) at opposite sides of the pull operation member (21, 22) are staggered half a tooth with respect to each other.

## Patentansprüche

1. Installationsdose (1), die in einem Loch einer Gebäudewand angeordnet werden soll, enthaltend eine Bodenwand (3), eine Umfangswand, bei der ein oberer Rand (4) eine Installationsöffnung begrenzt, und Verankerungseinrichtungen (20) zum Verankern der Installationsdose in dem Loch in der Wand, wobei die Verankerungseinrichtungen (20) ein Verankerungselement (29, 30) enthalten, das in eine Richtung (C) nach außen im Bezug auf die Umfangswand (2) im wesentlichen quer zur Umfangswand und/oder parallel zur Bodenwand (3) für einen Eingriff mit einer in Umfangsrichtung angrenzenden Wand des Loches bewegt werden kann, **dadurch gekennzeichnet, dass** die Verankerungseinrichtungen (20) ein Zugbetätigungselement (21, 22) enthalten, das im Bezug auf die Umfangswand (2) in einer Zugrichtung (B) weg von der Bodenwand (3) bewegt werden kann, um im Zusammenwirken mit dem Verankerungselement (29, 30) das Verankerungselement (29, 30) nach außen zu bewegen, wobei das Zugbetätigungselement (21, 22) während der Auswärtsbewegung des Verankerungselementes wenigstens teilweise über den oberen Rand (4) der Installationsdose (1) hinausragt.

2. Installationsdose (1) nach Anspruch 1, bei der das Zugbetätigungselement (21, 22) im wesentlichen quer zur Bodenwand (3) und/oder parallel zur Umfangswand (2) bewegt werden kann.

3. Installationsdose (1) nach einem der vorhergehenden Ansprüche, bei der das Verankerungselement (29, 30) in eine Auswärtsrichtung (C) im Bezug auf die Umfangswand (2) innerhalb eines radial äußeren Umfangsbereiches der Umfangswand (2) bewegt werden kann.

4. Installationsdose (1) nach einem der vorhergehenden Ansprüche, bei der das Verankerungselement (29, 30) in eine Auswärtsrichtung (C) im Bezug auf die Umfangswand (2) bewegt werden kann, um im wesentlichen radial in die in Umfangsrichtung angrenzende Wand des Loches zu greifen.

5. Installationsdose (1) nach einem der vorhergehenden Ansprüche, bei der das Verankerungselement (29, 30) und das Zugbetätigungselement (21, 22) im wesentlichen quer im Bezug zueinander bewegt werden können.

6. Installationsdose (1) nach einem der vorhergehenden Ansprüche, bei der das Verankerungselement (29, 30) und das Zugbetätigungselement (21, 22) mit einer Wandlereinrichtung (26, 29) versehen sind, die eine Translation des Betätigungselementes (21, 22) in der Zugrichtung (B) in eine Translation des Verankerungselementes (29, 30) in die Auswärtsrichtung (C) umwandelt.

7. Installationsdose (1) nach einem der vorhergehenden Ansprüche, bei der das Verankerungselement (29, 30) und/oder das Zugbetätigungselement (21, 22) eine Auflauffläche (52, 40) enthalten, die zur Zugrichtung (B) geneigt angeordnet ist, um die Zugbewegung des Betätigungselementes (21, 22) in die Auswärtsbewegung des Verankerungselementes (29, 30) umzuwandeln.

8. Installationsdose (1) nach Anspruch 6 oder 7, bei der das Verankerungselement (29, 30) ein erstes Keilelement (29) und das Zugbetätigungselement (21, 22) ein zweites Keilelement (26) enthält, das mit dem ersten Keilelement (29) zusammenwirkt.

9. Installationsdose nach Anspruch 8, bei der in einer Ausgangsstellung das erste und das zweite Keilelement (29, 26) gerade einander gegenüberliegend angeordnet sind.

10. Installationsdose (1) nach einem der vorhergehenden Ansprüche, bei dem in Zugrichtung (B) das Verankerungselement (29, 30) und das Zugbetätigungselement (21, 22) in wechselseitig beweglicher Art miteinander verbunden sind.

11. Installationsdose (1) nach Anspruch 9 oder 10, enthaltend ein bewegliches Gelenk (28) zwischen dem Verankerungselement (29, 30) und dem Zugbetätigungselement (21, 22).

12. Installationsdose (1) nach einem der Ansprüche 6 bis 11, bei der das Verankerungselement (29, 30) und das Zugbetätigungselement (21, 22) zusammenwirkende Anschläge (51, 41) enthalten, die die Translation des Zugbetätigungselementes (21, 22) in einer äußerst ausgedehnten Stellung des Zugbetätigungselementes (21, 22) begrenzen.

13. Installationsdose (1) nach einem der vorhergehenden Ansprüche, enthaltend erste Führungseinrichtungen (11a, b, 53), die das Verankerungselement (29, 30) in seiner Auswärtsrichtung (C) führen und einer Bewegung des Verankerungselementes (29, 30) in der Zugrichtung (B) entgegenwirken, wobei die ersten Führungseinrichtungen (11a, b, 53) vorzugsweise erste Zähne (11a, b) auf gegenüberliegenden Seiten eines Kanals (9), der in der Umfangswand (2) ausgebildet ist, und zweite Zähne (53) am Verankerungselement (29, 30) enthalten, wobei die zweiten Zähne (53) mit den ersten Zähnen (11a, b) zusammenwirken und die ersten Zähne (11a, b) in die zweiten Zähne (53) greifen und sich quer zur Umfangswand (2) erstrecken.

14. Installationsdose (1) nach einem der vorhergehenden Ansprüche, enthaltend zweite Führungseinrichtungen (44a, b, 24a, b), die das Zugbetätigungselement (21, 22) im Bezug auf die Umfangswand (2) führen, wobei die zweiten Führungseinrichtungen (44a, b, 24a, b) vorzugsweise einen Kanal (9) enthalten, der in der Umfangswand (2) ausgebildet ist, um wenigstens einen Abschnitt des Zugbetätigungselementes (21, 22) aufzunehmen, und die zweiten Führungseinrichtungen (44a, b, 24a, b) vorzugsweise eine längliche Führung oder Schiene (44a, b), die sich entlang des Kanals (9) erstreckt, sowie einen Eingriffsteil (24a, b) enthalten, der mit dem Zugbetätigungselement (21, 22) verbunden ist, wobei dieser Eingriffsteil (24a, b) in die längliche Führung (44a, b) greift.

15. Installationsdose (1) nach einem der vorhergehenden Ansprüche, enthaltend Blockiereinrichtungen (11 a, b, 27a, b), die einer Rückwärtsbewegung des Zugbetätigungselementes (21, 22) entgegenwirken, wobei die Blockiereinrichtungen (11a, b, 27a, b) vorzugsweise dritte Zähne (11a, b) auf gegenüberliegenden Seiten eines Kanals (9), der in der Umfangswand (2) ausgebildet ist, und vierte Zähne (27a, b) auf gegenüberliegenden Seiten des Zugbetätigungselementes (21, 22) enthalten, wobei die vierten Zähne (27a, b) mit den dritten Zähnen (11a, b) zusammenwirken und in Zugrichtung (B) die dritten und/oder vierten Zähne (11a, b, 27a, b) auf gegenüberliegenden Seiten des Zugbetätigungselementes (21, 22) im Bezug zueinander vorzugsweise um einen halben Zahn versetzt sind.

16. Installationsdose (1) nach einem der Ansprüche 13 bis 15, bei der der Kanal (9) quer zur Bodenwand (3) der Installationsdose (1) ausgerichtet ist.

17. Installationsdose (1) nach einem der vorhergehenden Ansprüche, bei der das Zugbetätigungselement (21, 22) einen Fingereingriffsteil (21) enthält, um das Zugbetätigungselement (21, 22) manuell von der Bodenwand (3) wegzuziehen, wobei der Fingereingriffsteil (21) mit Hilfe einer vorbestimmten Bruchverbindung (33) vorzugsweise einer vorbestimmten Torsionsbruchverbindung vorzugsweise eine Einheit mit dem Zugbetätigungselement (21, 22) bildet.

18. Installationsdose (1) nach einem der vorhergehenden Ansprüche, bei der das Verankerungselement (29, 30) eine Eingriffsoberfläche (30) enthält, die einen fünften Zahn oder Zähne (31) hat, der/die in die angrenzende Wand des Loches greift/greifen.

19. Installationsdose (1), die in einem Loch in einer Wand eines Gebäudes angeordnet werden soll, enthaltend eine Bodenwand (3)), eine Umfangswand (2), die eine Installationsöffnung begrenzt, und Verankerungseinrichtungen (20) zum Verankern der Installationsdose (1) in dem Loch in der Wand, wobei die Verankerungseinrichtungen (20) enthalten: ein Verankerungselement (29, 30), das mit der Wand in Eingriff gelangt, ein Zugbetätigungselement (21, 22), das in einer Zugrichtung (B) von der Bodenwand (3) durch einen Kanal (9) weggezogen werden kann, der in der Umfangswand (2) ausgebildet ist, und Blockiereinrichtungen (111a, b, 27a, b), die eine Rückwärtsbewegung des Zügbetäügungseiemenies (21, 22) entgegenwirken, wobei die Blockiereinrichtungen (11a, b, 27a, b) dritte Zähne (11a, b) auf gegenüberliegenden Seiten des Kanals (9) und vierte Zähne (27a, b) auf gegenüberliegenden Seiten des Zugbetätigungselementes (21, 22) enthalten, wobei die dritten Zähne (11a, b) mit den vierten Zähnen (27a, b) zusammenwirken, **dadurch gekennzeichnet, dass** in Zugrichtung (B) die dritten und/oder vierten Zähne (11a, b, 27a, b) auf gegenüberliegenden Seiten des Zugbetätigungselementes (21, 22) im Bezug zueinander um einen halben Zahn versetzt sind.

## Revendications

1. Boîtier d'installation (1) destiné à être placé dans un trou dans une paroi d'un bâtiment, comprenant une paroi de fond (3), une paroi circonférentielle dont un bord supérieur (4) délimite une ouverture d'installation, et des moyens d'ancrage (20) pour ancrer le boîtier d'installation dans le trou dans la paroi, où les moyens d'ancrage (20) comprennent un élément d'ancrage (29, 30) qui est mobile dans une direction vers l'extérieur (C) par rapport à la paroi circonférentielle (2), sensiblement transversalement à la paroi circonférentielle et/ou parallèlement à la paroi de fond (3), pour engagement sur une paroi de délimitation circonférentielle du trou, **caractérisé en ce que** les moyens d'ancrage (20) comprennent un élément d'actionnement par traction (21, 22) qui est mobile par rapport à la paroi circonférentielle (2) dans une direction de traction (B) s'éloignant de la paroi de fond (3) afin, en coopération avec l'élément d'ancrage (29, 30), de déplacer l'élément d'ancrage (29, 30) vers l'extérieur, lequel élément d'actionnement par traction (21, 22), durant le mouvement vers l'extérieur de l'élément d'ancrage, fait saillie, au moins en partie, au-dessus du bord supérieur (4) du boîtier d'installation (1).

2. Boîtier d'installation (1) selon la revendication 1, dans lequel l'élément d'actionnement par traction (21, 22) est mobile sensiblement transversalement à la paroi de fond (3) et/ou parallèlement à la paroi circonférentielle (2).

3. Boîtier d'installation (1) selon l'une quelconque des revendications précédentes, dans lequel l'élément d'ancrage (29, 30) peut être déplacé dans une direction vers l'extérieur (C) par rapport à la paroi circonférentielle (2) au sein d'une zone circonférentielle externe radiale de la paroi circonférentielle (2).

4. Boîtier d'installation (1) selon l'une quelconque des revendications précédentes, dans lequel l'élément d'ancrage (29, 30) est mobile dans une direction vers l'extérieur (C) par rapport à la paroi circonférentielle (2) pour un engagement sensiblement radial sur la paroi de délimitation circonférentielle du trou.

5. Boîtier d'installation (1) selon l'une quelconque des revendications précédentes, dans lequel l'élément d'ancrage (29, 30) et l'élément d'actionnement par traction (21, 22) sont mobiles sensiblement transversalement l'un par rapport à l'autre.

6. Boîtier d'installation (1) selon l'une quelconque des revendications précédentes, dans lequel l'élément d'ancrage (29, 30) et l'élément d'actionnement par traction (21, 22) sont pourvus de moyens de transformation (26, 29) pour transformer une translation de l'élément d'actionnement (21, 22) dans la direction de traction (B) en une translation de l'élément d'ancrage (29, 30) dans la direction vers l'extérieur (C).

7. Boîtier d'installation (1) selon l'une quelconque des revendications précédentes, dans lequel l'élément d'ancrage (29, 30) et/ou l'élément d'actionnement par traction (21, 22) comprennent une surface de roulement (52, 40) orientée inclinée par rapport à la direction de traction (B) pour transformation du mouvement de traction de l'élément d'actionnement (21, 22) en le mouvement vers l'extérieur de l'élément d'ancrage (29, 30).

8. Boîtier d'installation (1) selon la revendication 6 ou 7, dans lequel l'élément d'ancrage (29, 30) comprend un premier élément formant coin (29), et l'élément d'actionnement par traction (21, 22) un deuxième élément formant coin (26) qui coopère avec le premier élément formant coin (29).

9. Boîtier d'installation selon la revendication 8, dans lequel, dans une position initiale, les premier et deuxième éléments formant coins (29, 26) sont positionnés directement opposés l'un à l'autre.

10. Boîtier d'installation (1) selon l'une quelconque des revendications précédentes, dans lequel, dans la direction de traction (B), l'élément d'ancrage (29, 30) et l'élément d'actionnement par traction (21, 22) sont reliés l'un à l'autre de manière à être mobiles l'un par rapport à l'autre.

11. Boîtier d'installation (1) selon la revendication 9 ou 10, comprenant une charnière vive (28) entre l'élément d'ancrage (29, 30) et l'élément d'actionnement par traction (21, 22).

12. Boîtier d'installation (1) selon l'une quelconque des revendications 6 à 11, dans lequel l'élément d'ancrage (29, 30) et l'élément d'actionnement par traction (21, 22) comprennent des butées de coopération (51, 41) pour limiter la translation de l'élément d'actionnement par traction (21, 22) dans une position déployée ultime de l'élément d'actionnement par traction (21, 22).

13. Boîtier d'installation (1) selon l'une quelconque des revendications précédentes, comprenant des premiers moyens de guidage (11 a,b, 53) pour guider l'élément d'ancrage (29, 30) dans sa direction vers l'extérieur (C) et contrecarrer un mouvement de l'élément d'ancrage (29, 30) dans la direction de traction (B), où les premiers moyens de guidage (11 a,b, 53) comprennent, de préférence, des premières dents (11 a, b) sur les côtés opposés d'un canal (9) qui est formé dans la paroi circonférentielle (2), et des deuxièmes dents (53) à l'élément d'ancrage (29, 30), lesquelles deuxièmes dents (53) coopèrent avec les premières dents (11 a,b), les premières dents (11 a,b) s'engrenant avec les deuxièmes dents (53) et s'étendant transversalement à la paroi circonférentielle (2).

14. Boîtier d'installation (1) selon l'une quelconque des revendications précédentes, comprenant des deuxièmes moyens de guidage (44 a,b, 24 a,b) pour guider l'élément d'actionnement par traction (21, 22) par rapport à la paroi circonférentielle (2), où les deuxièmes moyens de guidage (44 a,b, 24 a,b) comprennent, de préférence, un canal (9) qui est formé dans la paroi circonférentielle (2) pour recevoir au moins une partie de l'élément d'actionnement par traction (21, 22), où les deuxièmes moyens de guidage (44 a,b, 24 a,b) comprennent, de préférence, un rail ou guide longitudinal (44 a,b) s'étendant le long du canal (9), et une partie d'engagement (24 a,b) reliée à l'élément d'actionnement par traction (21, 22), laquelle partie d'engagement (24 a,b) s'engage sur le guide longitudinal (44 a,b).

15. Boîtier d'installation (1) selon l'une quelconque des revendications précédentes, comprenant des moyens de blocage (11 a,b, 27 a,b) pour contrecarrer un mouvement inverse de l'élément d'actionnement par traction (21, 22), où les moyens de blocage (11 a,b, 27 a,b) comprennent, de préférence, des troisièmes dents (11 a, b) sur les côtés opposés d'un canal (9) qui est formé dans la paroi circonférentielle (2), et des quatrièmes dents (27 a,b) sur les côtés opposés de l'élément d'actionnement par traction (21, 22), lesquelles quatrièmes dents (27 a,b) coopèrent avec les troisièmes dents (11 a,b), où, dans la direction de traction (B), les troisièmes et/ou quatrièmes dents (11 a,b, 27 a,b) sur les côtés opposés de l'élément d'actionnement par traction (21, 22) sont, de préférence, échelonnées une moitié de dent les unes par rapport aux autres.

16. Boîtier d'installation (1) selon l'une quelconque des revendications 13 à 15, dans lequel le canal (9) est orienté transversalement à la paroi de fond (3) du boîtier d'installation (1).

17. Boîtier d'installation (1) selon l'une quelconque des revendications précédentes, dans lequel l'élément d'actionnement par traction (21, 22) comprend une partie d'engagement formant doigt (21) pour tirer manuellement l'élément d'actionnement par traction (21, 22) loin de la paroi de fond (3), la partie d'engagement formant doigt (21), de préférence au moyen d'une connexion susceptible de rupture (33), de préférence une connexion susceptible de rupture à torsion prédéterminée, formant une unité avec l'élément d'actionnement par traction (21, 22).

18. Boîtier d'installation (1) selon l'une quelconque des revendications précédentes, dans lequel l'élément d'ancrage (29, 30) comprend une surface d'engagement (30) ayant une cinquième dent ou des cinquièmes dents (31) pour engagement sur la paroi de délimitation du trou.

19. Boîtier d'installation (1) destiné à être placé dans un trou dans une paroi d'un bâtiment, comprenant une paroi de fond (3), une paroi circonférentielle (2) délimitant une ouverture d'installation, et des moyens d'ancrage (20) pour ancrer le boîtier d'installation (1) dans le trou dans la paroi, où les moyens d'ancrage (20) comprennent un élément d'ancrage (29, 30) pour engagement sur la paroi, un élément d'actionnement par traction (21, 22) qui est mobile dans une direction de traction (B) s'éloignant de la paroi de fond (3) via un canal (9) qui est formé dans la paroi circonférentielle (2), et des moyens de blocage (11 a,b, 27 a,b) pour contrecarrer un mouvement inverse de l'élément d'actionnement par traction (21, 22), les moyens de blocage (11 a,b, 27 a,b) comprenant des troisièmes dents (11 a, b) sur les côtés opposés du canal (9), et des quatrièmes dents (27 a,b) sur les côtés opposés de l'élément d'actionnement par traction (21, 22), lesquelles troisièmes dents (11 a,b) coopèrent avec les quatrièmes dents, **caractérisé en ce que,** dans la direction de traction (B), les troisièmes et/ou quatrièmes dents (11 a,b, 27 a,b) sur les côtés opposés de l'élément d'actionnement par traction (21, 22) sont échelonnées une moitié de dent les unes par rapport aux autres.
